# EUROPEAN PATENT APPLICATION

(11) **EP 3 181 268 A1**
(43) Date of publication of application: **21.06.2017**
(21) Application number: 14899915.4
(22) Date of filing: 26.08.2014
(51) Int. Cl.: B22D 19/04, C22C 45/00, H05K 5/02

(54) **METHOD FOR INTEGRALLY FORMING NON-METAL PART AND METAL PART**

(30) Priority: 14.08.2014 CN 201410401392
(71) Applicant: Dongguan Revolution Product Design Co., Ltd, Dongguan, Guangdong 523660 (CN)
(72) Inventor: LI, Lugee, Dongguan Guangdong 523660 (CN)
(74) Representative: Hryszkiewicz, Danuta
(86) International application number: PCT/CN2014/085136
(87) International publication number: WO 2016/023244

(57) **Abstract**

A method for integrally forming a non-metal part and a metal part. The method comprises the following steps: A, arranging a non-transparent non-metal part in a mold; B, arranging a metal part on the periphery of the non-metal part in the mold, the metal part being a continuous structure located on the periphery of the non-metal part; C, heating the metal part so that the metal part is formed into semi-solid metal defined in a mold cavity; D, extruding the semi-solid metal through the mold, so that the semi-solid metal is combined with the periphery of the non-metal part in a seamless mode; and E, quickly cooling the semi-solid metal located on the periphery of the non-metal part, so that the semi-solid metal is formed into amorphous metal combined with the periphery of the non-metal part in a seamless mode. The method is simple and practicable, the rate of finished products is high, the metal part obtained through extrusion has high compactness and strength, and the difficulty in follow-up surface treatment of the metal part is reduced

## Description

The invention relates to a method for integrating a non-metal part with a metal part.

Conventionally, frames of electronic equipment including mobile phones and tablet computers use alloy material. The metal frames formed by alloy material have a better appearance and can protect the fragile panel or backplane of the electronic equipment. Specifically, the panel, backplane, or plastic component of the electronic equipment is embedded in a processed metal frame, and then the metal frame is assembled with a corresponding part. However, the assembly method leaves certain gaps between the metal frame and the panel or backplane of the electronic product, and the assembly gaps cannot be eliminated completely even using precision machining.

Chinese Patent No. CN101815594 discloses a method for imbedding a glass insert in a metal frame and electronic equipment prepared using the method. The method includes placing a metal frame on the surface or the edge of a transparent component using a metal modeling process. To be specific, the transparent component is placed in the chamber of a mold. Liquid metal is poured into the chamber, and when the metal is cooled, a metal frame is formed on the surface or the edge of the transparent component. By using the method, the assembly gaps are eliminated, and the transparent component is integrated with the metal frame. However, during operation, the metal requires heating, casting, and cooling quickly, which involves a complex process, and the product yield is low. The above patent also discloses a method for shaping metal powders at the edge of a transparent component using a Metal Injection Molding (MIM) process. Specifically, the metal powders are shaped at the edge of the transparent component using a high-temperature sintering process. The metal frame formed by high-temperature sintering process has relatively loose interior structure, which is unfavorable to subsequent surface treatments including polishing, oxidization, and electroplating, and the appearance of the electronic product leaves much to be desired.

The method of the above-mentioned patent CN101815594 only discloses integrating a transparent component such as glass or sapphire with metal material. In the modeling process or MIM process, the transparent component is exposed under high temperatures, which adversely affects the properties and the organizational structure of the transparent component, as a result, when the transparent component is integrated with the metal material, the combination thereof is not tight thus affecting the appearance of the electronic products.

In view of the above-described problems, it is one objective of the invention to provide a method for integrating a non-metal part with a metal part. The method is easy to operate, has high product yield, and facilitates the surface treatment of the metal part. In addition, the integrated product formed by the method has beautiful appearance.

To achieve the above objective, in accordance with one embodiment of the invention, there is provided the method for integrating a non-metal part with a metal part, the method comprising:
1) placing an opaque non-metal part in a mold;
2) placing a metal part in the mold along an edge of the non-metal part, the metal part being a continuous structure along the edge of the non-metal part;
3) heating the metal part, and transforming the metal part into a semi-solid metal limited in a chamber of the mold;
4) extruding the semi-solid metal using the mold to enable the semi-solid metal to be seamlessly secured to the edge of the non-metal part; and
5) quick cooling the semi-solid metal on the edge of the non-metal part, so that the semi-solid metal is transformed into amorphous metal seamlessly secured to the edge of the non-metal part.

In a class of this embodiment, the metal part is aluminum magnesium alloy, aluminum copper alloy, aluminum nickel alloy, zirconium alloy, or titanium alloy.

In a class of this embodiment, the edge of the non-metal part is provided with a clamping structure.

In a class of this embodiment, the clamping structure is a groove or a lug boss on the edge of the non-metal part.

In a class of this embodiment, a thermal expansion coefficient of the metal part is greater than or equal to a thermal expansion coefficient of the non-metal part.

In a class of this embodiment, prior to 3), a buffer is disposed between the metal part and the non-metal part. The buffer is a continuous structure along the edge of the non-metal part.

In a class of this embodiment, the non-metal part is ceramic.

Advantages of the method according to embodiments of the invention are summarized as follows:

Compared with the method in the prior art, the method in the embodiments of the invention uses a hot pressing process, and the metal part is integrated on the edge of the opaque non-metal part. The method is easy to operate, and has high product yield. The pressed metal part features relatively high density and intensity. In addition, the method facilitates the surface treatment of the metal part.
FIG. 1 is a flow chart of a method for integrating a non-metal part with a metal part in accordance with one embodiment of the invention; and
FIG. 2 is a schematic diagram of a mold used in a method for integrating a non-metal part with a metal part in accordance with one embodiment of the invention.

For further illustrating the invention, experiments detailing a method for integrating a non-metal part with a metal part are described below.

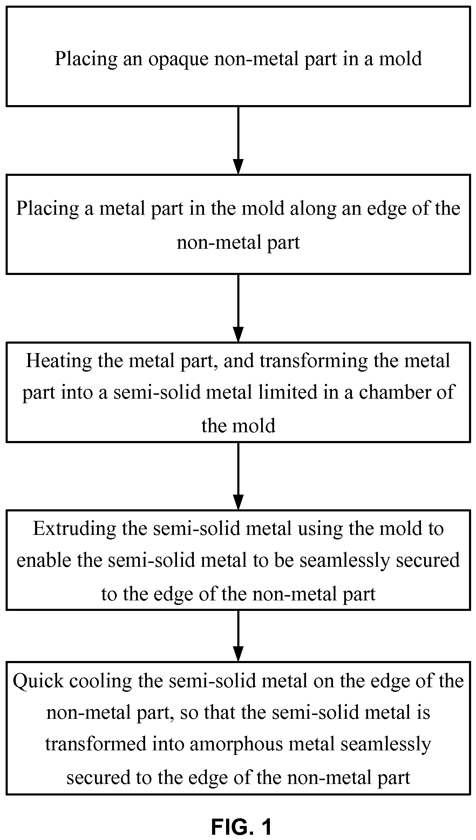

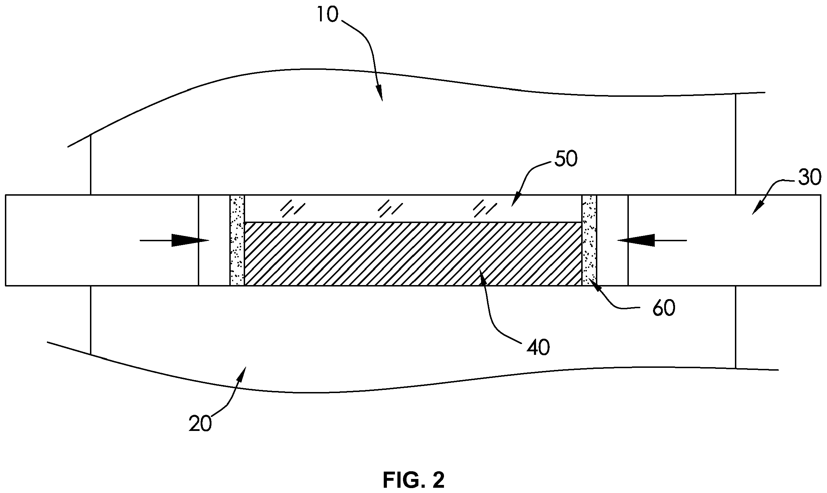

As shown in FIG. 1, the method for integrating the non-metal part with the metal part is provided in the example of the invention. The method is used for integrating a ceramic plate 50 and a metal frame 60 to form an integrated component. The integrated component is used as a part of electronic products. The ceramic plate 50 is used as a back plate of the electronic products, and the metal frame 60 is used as a metal frame on an edge of the electronic products. The method comprises the following steps:
1) The ceramic plate 50 is placed in a chamber of a mold shown in FIG. 2. Specifically, the ceramic plate 50 is disposed in a mold core unit 40 on a parting surface of a fixed half 20. The size of the mold core unit 40 is corresponding to that of the ceramic plate 50. After the ceramic plate is disposed on the mold core unit, an edge of the ceramic plate 50 is aligned with an edge of the mold core unit 40.
2) The metal frame 60 is placed in the mold and on the edge of the ceramic plate 50. The metal frame 60 forms a continuous structure along the edge of the ceramic plate 50. Thereafter, a moving half 10 presses downwards, and the metal frame 60 surrounds the edges of the ceramic plate 50 and the mold core unit 40. A mold closing unit 30 which is on the edge of the parting surface is moved so as to enclose the chamber of the mold. The metal frame 60 is fixed at the edge of the chamber of the mold. Certain movable distance of the mold closing unit 30 is ensured, so as to avoid large extrusion force on the ceramic plate 50 caused by the metal frame 60 during lateral heating.
3) The metal frame 60 is heated. Preferably, the metal frame 60 is aluminum magnesium alloy. The metal frame 60 is heated by a heating apparatus, and is converted to be semi-solid metal. Due to the thermal expansion of the metal frame 60, the metal frame presses the mold closing unit 30 outwards, and the mold closing unit 30 moves away from the chamber of the mold. As the metal frame 60 is not thick, the displacement of the mold closing unit 30 caused by the thermal expansion is small. Optionally, the displacement of the mold closing unit 30 caused by thermal expansion is calculated according to the thickness of the metal frame 60, the thermal expansion coefficient, and the heating temperature, etc., so that a spacing mechanism can be provided for the mold closing unit 30 according to the calculated displacement.
4) The mold closing unit 30 is pressed towards the chamber of the mold by a hydraulic cylinder or other mechanisms, so that the semi-solid metal frame 60 shrinks to the edge of the ceramic plate 50, ensuring the semi-solid metal frame 60 to be seamlessly secured to the edge of the ceramic plate 50. The pressing force on the mold closing unit 30 is kept.
5) As the pressing force on the mold closing unit 30 is kept, refrigerant is transmitted through the cooling channel of the mold by the cooling device to the semi-solid metal frame 60, so that the semi-solid metal frame is quickly cooled. During the quick cooling of the semi-solid metal frame 60, the interior atoms of the alloy has no enough time to crystallize orderly, thus the solid amorphous alloy having a disordered structure is prepared. Finally, the metal frame 60 is molded into the metal frame 60 made of amorphous alloy on the edge of the ceramic plate 50. After separating from the mold, an integrated component integrating the metal frame 60 and the ceramic plate 50 is prepared.

In the above method, 3), 4), 5) are conducted under vacuum environment to avoid oxidation of the metal frame 60 under high temperatures. Specifically, following 2), the air in the chamber of the mold is exhausted by an external vacuum device.

The integrated component prepared by the above method can be applied to the electronic products having a ceramic back plate and a metal frame. The ceramic plate 50, which is used as the back plate, compared with the existing metal mobile phone shell, is unlikely to shield the network signal, and can enhance the WiFi signal of the phone. Meanwhile, by using the ceramic plate, Near Field Communication (NFC) and wireless charging of the phone can be realized. In addition, single crystal silicon on the outside makes it possible for the phone to be charged using solar energy.

As the integrated component is applied to the electronic products, after separating from the mold, the integrated component needs to be polished, plated, oxidized, etc. In the above method, the metal frame 60 is processed using a semi-solid metal technique, and the metal frame 60 features a dense interior structure and high intensity, thus laying a favorable foundation for the surface treatments such as polish, plating, oxidization, etc.

In the example, favorably, the metal frame 60 is aluminum copper alloy, aluminum nickel alloy, zirconium alloy, or titanium alloy. Other metal materials that can be used for preparing the metal frame 60 of the electronic products are optional.

The edge of the ceramic plate 50 is provided with a clamping structure to increase the bonding intensity. Specifically, the clamping structure is a groove formed by extending the edge of the ceramic plate 50. While the semi-solid metal frame 60 is extruded, part of the inner surface forms a structure embedding in the groove. Optionally, the clamping structure is a lug boss formed by extending the edge of the ceramic plate 50. While the semi-solid metal frame 60 is extruded, the metal frame experiences deformation so as to clamp the lug boss.

In selecting the materials, a metal frame 60 which has a thermal expansion coefficient larger than or equal to a thermal expansion coefficient of the ceramic plate 50 is preferable, therefore, when the metal frame 60 is heated, the thermal expansion of the ceramic plate 50 can be effectively controlled, and the adverse influence of the temperature on the ceramic plate 50 is reduced. As a component of electronic products, optionally, the ceramic plate 50 uses plate-shaped high-temperature resistant materials such as quartz stone or marble, or other materials such as boride, carbide, fluoride, silicide, phosphide, sulfide.

In the example, prior to 3), a buffer is disposed between the metal frame 60 and the edge of the ceramic plate 50. The buffer is a continuous structure along the edge of the ceramic plate 50. Optionally, the buffer can be a component which works to facilitate the integration of the ceramic plate 50 and the metal frame 60; or the buffer is an elastic component, for example, the buffer is 65Mn. The buffer which is made of 65Mn features favorable elasticity, therefore, as the buffer is disposed in the integrated component comprising the metal frame 60 and the ceramic plate 50, the buffer can buffer the impact force and effectively protect the ceramic plate 50 when the electronic product falls down and the metal frame 60 faces the impact force.

The method in the example of the invention is also applicable for other integration of a metal part with an opaque non-metal part such as ceramic. However, no matter what the method is applied, the steps are mostly the same as those in the method in the example of the invention, and no need to be illustrated here.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A method for integrating a non-metal part with a metal part, the method comprising:
1) placing an opaque non-metal part in a mold;
2) placing a metal part in the mold along an edge of the non-metal part, the metal part being a continuous structure along the edge of the non-metal part;
3) heating the metal part, and transforming the metal part into a semi-solid metal limited in a chamber of the mold;
4) extruding the semi-solid metal using the mold, the semi-solid metal being seamlessly secured to the edge of the non-metal part; and
5) cooling the semi-solid metal on the edge of the non-metal part, the semi-solid metal being transformed into amorphous metal seamlessly secured to the edge of the non-metal part.

2. The method of claim 1, **characterized in that** the metal part is aluminum magnesium alloy, aluminum copper alloy, aluminum nickel alloy, zirconium alloy, or titanium alloy.

3. The method of claim 1, **characterized in that** the edge of the non-metal part is provided with a clamping structure.

4. The method of claim 3, **characterized in that** the clamping structure is a groove or a lug boss on the edge of the non-metal part.

5. The method of claim 1, **characterized in that** a thermal expansion coefficient of the metal part is greater than or equal to a thermal expansion coefficient of the non-metal part.

6. The method of claim 1, **characterized in that** prior to 3), a buffer is disposed between the metal part and the non-metal part; and the buffer is a continuous structure along the edge of the non-metal part.

7. The method of claim 1, **characterized in that** the non-metal part is ceramic, quartz stone, or marble.

8. The method of claim 1, **characterized in that** 3), 4), 5) are conducted under vacuum environment.
